(19) **Europäisches Patentamt / European Patent Office / Office européen des brevets**

(11) **EP 1 768 295 B1**

(12) **EUROPEAN PATENT SPECIFICATION**

(45) Date of publication and mention
of the grant of the patent:
**11.09.2019 Bulletin 2019/37**

(51) Int Cl.:
*H04L 1/00* (2006.01)   *H04L 1/06* (2006.01)

(21) Application number: **06020299.1**

(22) Date of filing: **27.09.2006**

(54) **System and method for transmitting/receiving signal in a mobile communication system using a multiple input multiple output (MIMO) scheme**

System und Verfahren zum Senden/Empfangen eines Signals in einem mobilen Kommunikationssystem mit Verwendung eines Mehrfacheingangs-/Mehrfachausgangssystems

Système et procédé d'émission/réception d'un signal dans un système de communication mobile à entrées et à sorties multiples

(84) Designated Contracting States:
**DE FR GB IT SE**

(30) Priority: **27.09.2005 KR 20050089968**

(43) Date of publication of application:
**28.03.2007 Bulletin 2007/13**

(73) Proprietor: **Samsung Electronics Co., Ltd.**
**Suwon-si, Gyeonggi-do, 443-742 (KR)**

(72) Inventors:
• **Jung, Young-Ho,**
**Samsung Elec. Co., Ltd.**
**Suwon-si,**
**Gyeonggi-do (KR)**
• **Kim, Yung-Soo,**
**Samsung Elec. Co., Ltd.**
**Suwon-si,**
**Gyeonggi-do (KR)**
• **Nam, Seung-Hoon,**
**Samsung Elec. Co., Ltd.**
**Suwon-si,**
**Gyeonggi-do (KR)**
• **Tarokh, Vahid**
**Cambridge, MA 02139 (US)**

(74) Representative: **Grünecker Patent- und**
**Rechtsanwälte**
**PartG mbB**
**Leopoldstraße 4**
**80802 München (DE)**

(56) References cited:
**WO-A1-99/14871**      **US-A1- 2003 072 395**
**US-A1- 2003 076 777**

• **CHAU YUEN ET AL: "Differential transmit diversity based on quasi-orthogonal space-time block code", GLOBAL TELECOMMUNICATIONS CONFERENCE, 2004. GLOBECOM '04. IEEE DALLAS, TX, USA 29 NOV.-3 DEC., 2004, PISCATAWAY, NJ, USA, IEEE, PISCATAWAY, NJ, USA, vol. 1, 29 November 2004 (2004-11-29), pages 545-549, XP010759747, DOI: 10.1109/GLOCOM.2004.1378006 ISBN: 978-0-7803-8794-2**
• **ZHENG DU ET AL: "A new two level differential unitary space-time modulation", WIRELESS COMMUNICATIONS AND NETWORKING CONFERENCE, 2005 IEEE NEW ORLEANS, LA, USA 13-17 MARCH 2005, PISCATAWAY, NJ, USA, IEEE, vol. 1, 13 March 2005 (2005-03-13), pages 479-482, XP010791210, DOI: 10.1109/WCNC.2005.1424547 ISBN: 978-0-7803-8966-3**

**EP 1 768 295 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

1. Field of the Invention

The present invention relates generally to a system and a method for transmitting/receiving signals in a mobile communication system using a Multiple Input Multiple Output (MIMO) scheme, which will be referred to as a MIMO mobile communication system, and in particular, to a system and a method for transmitting/receiving signals by using a differential Spatial Multiplexing (SM) scheme.

2. Description of the Related Art

The most fundamental issue in communication concerns how efficiently and reliably data can be transmitted through a channel. The next generation multimedia mobile communication system, which has been actively researched in recent years, requires a high-speed communication system capable of processing and transmitting various information such as image and wireless data, rather than an initial communication system providing only a voice-based service. Accordingly, it is indispensable to improve system efficiency by using a channel coding scheme appropriate for a mobile communication system.

In contrast with wired channel environments, in wireless channel environments existing in a mobile communication system, information can be lost due to an unavoidable error caused by various factors such as multipath interference, shadowing, electric wave attenuation, time-varying noise, interference and fading. The information loss can become a factor for deteriorating the entire performance of the mobile communication system because it can actually cause a significant distortion in transmitted signals. Generally, in order to reduce the information loss as described above, it is necessary to improve the reliability of a system by using various error control techniques based on characteristics of channels. From among these error control techniques, an error-correcting code is basically used.

A diversity scheme is used to remove the instability of communication due to fading. The diversity scheme can be largely classified as a time diversity scheme, a frequency diversity scheme, and an antenna diversity scheme, i.e. a space diversity scheme.

The antenna diversity scheme uses multiple antennas, which can be classified as a receive antenna diversity scheme including and applying a plurality of receive antennas, a transmit antenna diversity scheme including and applying a plurality of transmit antennas, a MIMO scheme including and applying a plurality of receive antennas and a plurality of transmit antennas, and a Multiple Input Single Output (MISO) scheme.

The MIMO scheme and MISO scheme are types of space-time block coding schemes. In a space-time block coding scheme, signals coded in a preset coding scheme are transmitted using a plurality of transmit antennas so as to expand a coding scheme in a time domain to a space domain for achieving a lower error rate.

When a MIMO mobile communication system assumes a slow fading channel environment, the space-time block coding scheme is well known as a scheme capable of providing superior performance through a relatively simple decoding process.

Generally, it is assumed that a Channel State Information (CSI) is useful in a receiver-side within the space-time block coding scheme. Actually, the CSI is estimated using a training symbol. However, a scheme not estimating the CSI in the receiver-side is preferable because of both cost reduction and reduction in the degree of complexity of a receiver. The representative example corresponds to a case where a MIMO mobile communication system assumes a fast fading channel environment.

As described above, the space-time block coding scheme is not suitable to a case where a MIMO mobile communication system assumes a fast fading channel environment because a receiver-side must inevitably estimate the CSI. As a result, a differential space-time block coding scheme has been provided in order to achieve the performance of the space-time block coding scheme in the fast fading channel environment. For example, the differential space-time block coding scheme causes performance loss of about 3dB as compared to the space-time block coding scheme, but it is nearly similar to the space-time block coding scheme in terms of the degree of decoding complexity.

When a MIMO mobile communication system using the differential space-time block coding scheme employs a high-order modulation scheme, e.g. a 16 Quadrature Amplitude Modulation (QAM) scheme, as a modulation scheme, average transmit power of transmitted signals increases due to the characteristics of a differential modulation scheme. Accordingly, when a MIMO mobile communication system uses the differential space-time block coding scheme, the MIMO mobile communication system can only use a low-order modulation scheme, i.e. a Phase Shift Keying (PSK)-based modulation scheme including a Quadrature PSK scheme, a 8 PSK scheme, a 16 PSK scheme, etc., which results in limitation in a modulation scheme.

In the differential space-time block coding scheme, signals are transmitted using a unitary space-time matrix.

In such a case, when the transmitted signals are real number signals, a symbol transmission rate is limited to a maximum rate of 1 for all transmit antennas. When the transmitted signals are complex number signals, a symbol transmission rate is limited to a maximum rate of 3/4 for specific transmit antennas among multiple transmit antennas.

Accordingly, it is necessary to provide a signal transmission/reception method in a MIMO mobile communication system, in which no limitation exists in supportable symbol transmission rates , and the CSI estimation by a receiver is not necessary.

A differential space-time modulation scheme to provide full transmit diversity with non-coherent detection is known from C. Yuen et al., "Differential Transmit Diversity Based on Quasi-Orthogonal Space-Time Block Code", Globecom 04, pages 545-549.

A differential space-code with rate 2.5 bit/s/Hz for two transmit antennas is known from Z. Du et al., "A New Two Level Differential Unitary Space-Time Modulation", Wireless Communications and Networking conference, 2005, pages 479-482.

An apparatus and methods for providing efficient space-time structures for preambles, pilots and data for multi-input, multi-output communications systems are disclosed in US 2003/0076777.

A transmitter diversity technique for wireless communications is disclosed in WO 99/14871.

US 2003/072395 discloses that a method and apparatus are provided for combining pilot symbols and Transmit Parameter Signalling (TPS) channels within an OFDM frame. The method uses Differential Space-Time Block Coding to encode a fast signalling message at an OFDM transmitter. At an OFDM receiver, the encoded fast signalling message can be decoded using differential feedback to recover information about the channel responses that would normally be carried by pilot symbols. In wireless data transmission employing adaptive modulation and coding, an instantaneous channel quality measurement, independent of the origin of interference for example, neighboring-cell interference, white thermal noise, or residual Doppler shift is provided. Using the correlation between a signal which has been symbol de-mapped, and one which has also been soft decoded and re-encoded, a channel quality indicator is produced. Another embodiment uses TPS data as pilot symbols by decoding TPS and then re-encoding.

## SUMMARY OF THE INVENTION

Accordingly, the present invention has been made to solve the above-mentioned problems occurring in the conventional art, and it is an object of the present invention to provide a system and a method for transmitting/receiving signals by using a differential SM scheme in a MIMO mobile communication system.

It is another object of the present invention to provide a system and a method for transmitting signals by using a differential SM scheme in a MIMO mobile communication system, in which no limitation exists in supportable symbol transmission rates.

It is yet another object of the present invention to provide a system and a method for transmitting signals by using a differential SM scheme in a MIMO mobile communication system, in which CSI estimation is not necessary.

The invention provides a method for transmitting signals by a transmitter according to claim 1, a transmitter according to claim 10.

## BRIEF DESCRIPTION OF THE DRAWINGS

The above and other objects, features and advantages of the present invention will be more apparent from the following detailed description taken in conjunction with the accompanying drawings, in which:

FIG. 1 is a block diagram schematically illustrating the structure of a Multiple Input Multiple Output (MIMO) mobile communication system according to the present invention;

FIG. 2 is a block diagram schematically illustrating the structure of the transmission matrix generator in FIG. 1;

FIG. 3 is a graph illustrating a comparison between performance achieved when a Multiple Input Multiple Output (MIMO) mobile communication system uses a general differential space-time block coding scheme and performance achieved when the MIMO mobile communication system uses a differential Spatial Multiplexing (SM) scheme according to the present invention; and

FIG. 4 is a graph illustrating a comparison between performance achieved when a Multiple Input Multiple Output (MIMO) mobile communication system applies a normalization weight according to the present invention and performance achieved when the MIMO mobile communication system does not apply the normalization weight.

## DETAILED DESCRIPTION OF THE PREFERRED EMBODIMENT

A preferred embodiment of the present invention will be described in detail herein below with reference to the accompanying drawings. In the following description, a detailed description of known functions and configurations incorporated herein will be omitted when it may obscure the subject matter of the present invention.

The present invention provides a system and a method for transmitting/receiving signals in a mobile communication system using a Multiple Input Multiple Output (MIMO) scheme, which will be referred to as a MIMO mobile communication system. Specifically, the present invention provides a system and a method for transmitting/receiving signals by using a new differential Spatial Multiplexing (SM) scheme in a MIMO mobile communication system, in which no limitation exists in available modulation schemes, and supportable symbol transmission rates are also not limited.

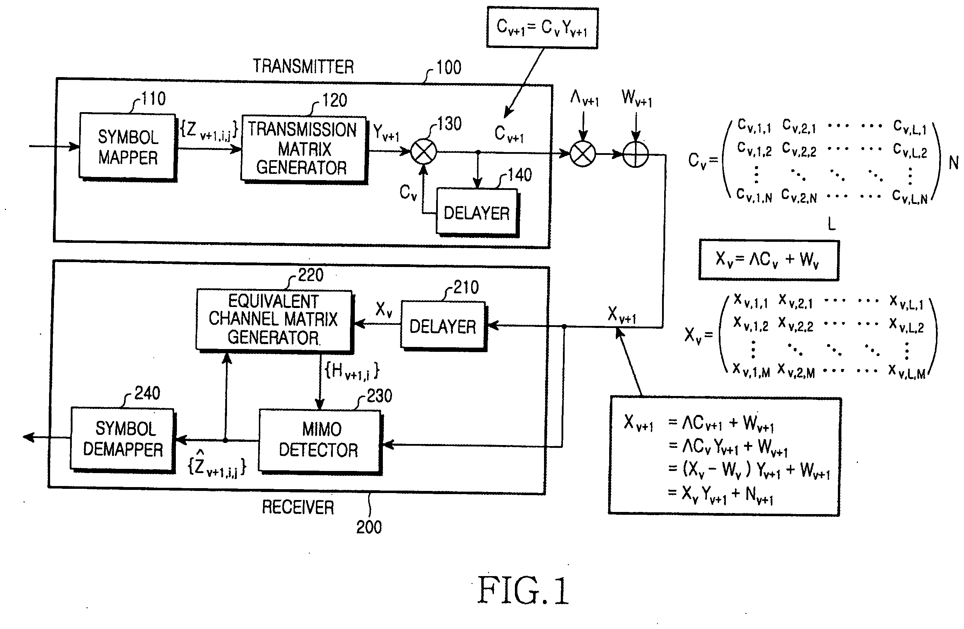

FIG. 1 is a block diagram schematically illustrating the structure of a MIMO mobile communication system according to the present invention. Referring to FIG. 1, the MIMO mobile communication system includes a transmitter 100 and a receiver 200. The transmitter 100 includes a symbol mapper 110, a transmission matrix generator 120, a multiplier 130 and a delayer 140, and the receiver 200 includes a delayer 210, an equivalent channel matrix generator 220, a MIMO detector 230 and a symbol demapper 240.

First, if binary bits are input to the symbol mapper 110, it symbol-maps the binary bits by using a preset symbol mapping scheme, and outputs the mapped binary bits to the transmission matrix generator 120. The binary bits can also be information data bits before coding, or coded bits into which the information data bits have been coded by using a preset coding scheme. However, since the binary bits have no direct connection to the present invention, details will be omitted here. Hereinafter, signals output from the symbol mapper 110 will be referred to as a modulation symbol, and a modulation symbol output from the symbol mapper 110 will be expressed by $\{z_{v+1, i, j}\}$.

In the modulation symbol $\{z_{v+1, i, j}\}$, v denotes the index of a corresponding transmission time interval, i denotes the index of blocks constituting a codeword, and j denotes a transmit antenna index. It is assumed that the codeword includes a plurality of modulation symbols, i.e. a plurality of blocks, and one codeword includes L blocks. In the present invention, it is assumed that the number of transmit antennas used by the transmitter 100 is N and the number of receive antennas used by the receiver 200 is M. Thus, the transmit antenna index j may be expressed by (1, 2, ..., N) (j = 1, 2, ..., N), and the block index i may be expressed by (1, 2, ..., L) (i = 1, 2, ..., L). That is, the modulation symbol $\{z_{v+1, i, j}\}$ denotes an $i^{th}$ block transmitted through a $j^{th}$ transmit antenna in a $(v+1)^{th}$ transmission time interval.

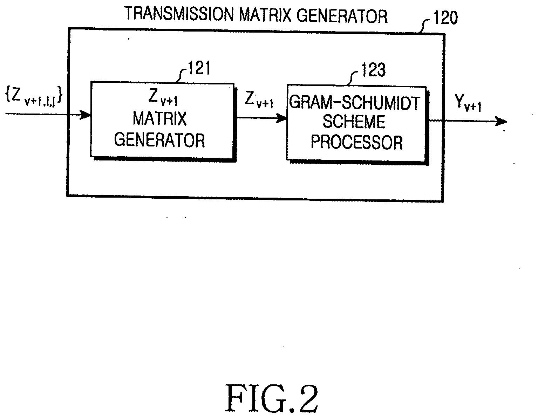

If the modulation symbol $\{z_{v+1, i, j}\}$ output from the symbol mapper 110 is input, the transmission matrix generator 120 generates a matrix $z_{(v+1)}$ by using a preset scheme, generates a unitary space-time matrix $Y_{(v+1)}$ by applying a Gram-Schumidt scheme to the matrix $z_{(v+1)}$, and outputs the unitary space-time matrix $Y_{(v+1)}$ to the multiplier 130. The unitary space-time matrix $Y_{(v+1)}$ is a (L X L) matrix including information about the modulation symbol $\{z_{v+1, i, j}\}$, and the transmission matrix generator 120 generates the unitary space-time matrix by the codeword. Since the internal construction and detailed operation of the transmission matrix generator 120 will be described in detail with reference to FIG. 2, details will be omitted here.

The multiplier 130 multiplies the unitary space-time matrix $Y_{(v+1)}$ by final transmission signals $C_v$ in a $v^{th}$ time interval, which are output from the delayer 140, so as to generate final transmission signals $C_{(v+1)}$ in a $(v+1)^{th}$ time interval, and outputs the final transmission signals $C_{(v+1)}$. That is, the final output signals $C_{(v+1)}$ transmitted from the transmitter 100 in the $(v+1)^{th}$ time interval can be expressed by Equation (1) below.

$$C_{(v+1)} = C_v Y_{(v+1)} \qquad\qquad \ldots (1)$$

As expressed by Equation (1), the final output signals $C_{(v+1)}$ transmitted from the transmitter 100 in the $(v+1)^{th}$ time interval is expressed as the product of the final transmission signals $C_v$ in the $v^{th}$ time interval, which is a previous time interval, and the unitary space-time matrix $Y_{(v+1)}$ corresponding to signals to be actually transmitted by the transmitter 100. This is because the transmitter 100 uses a differential SM scheme. Further, the final output signals $C_{(v+1)}$ is a (N X L) matrix. Herein, L denotes a codeword length, rows in the (N X L) matrix of the final output signals $C_{(v+1)}$ are perpendicular to one another, and columns are also perpendicular one another.

The final output signals $C_{(v+1)}$ are transmitted through N transmit antennas (not shown) used by the transmitter 100, the transmitted final output signals $C_{(v+1)}$ becomes signals including noise while experiencing channel conditions, and then are received through M receive antennas (not shown) of the receiver 200. That is, the signals received in the receiver 200 can be expressed by Equation (2) below.

$$X_{(v+1)} = \Lambda C_{(v+1)} + W_{(v+1)} \qquad\qquad \ldots (2)$$

In Equation (2), $X_{(v+1)}$ denotes signals received in the receiver 200 in the $(v+1)^{th}$ time interval, $\Lambda$ denotes a channel response, and $W_{(v+1)}$ denotes noise in the $(v+1)^{th}$ time interval. In Equation (2), the final transmission signals $C_v$ in the $v^{th}$ time interval can be expressed by Equation (3) below.

$$C_v = \begin{pmatrix} C_{v,1,1} & C_{v,2,1} & \Lambda & \Lambda & C_{v,L,1} \\ C_{v,1,2} & C_{v,2,2} & \Lambda & \Lambda & C_{v,L,2} \\ M & O & O & O & M \\ C_{v,1,N} & C_{v,2,N} & \Lambda & \Lambda & C_{v,L,N} \end{pmatrix} \qquad \ldots (3)$$

In Equation (3), each row corresponds to N transmit antennas and each column corresponds to a codeword length L. That is, the codeword includes the total L blocks from a first block to an $L^{th}$ block. In equation 3, $C_{v,L,N}$ denotes the $L^{th}$ block transmitted through an $N^{th}$ transmit antenna in the $v^{th}$ time interval.

As described above, since the final output signals $C_{(v+1)}$ in the $(v+1)^{th}$ time interval are expressed as the product of the final transmission signals $C_v$ in the $v^{th}$ time interval, which is a previous time interval, and the unitary space-time matrix $Y_{(v+1)}$ in the $(v+1)^{th}$ time interval, Equation (2) can be expressed by Equation (4) below.

$$X_{(v+1)} = \Lambda C_v Y_{(v+1)} + W_{(v+1)} \qquad \ldots (4)$$

If Equation (4) is deployed for the unitary space-time matrix $Y_{v+1}$, it can be expressed by Equation (5) below.

$$X_{(v+1)} = (X_v - W_v)Y_{(v+1)} + W_{(v+1)} \qquad \ldots (5)$$

In Equation (5), $X_v$ denotes signals received in the receiver 200 in the $v^{th}$ time interval, which can be expressed by Equation (6) below.

$$X_v = \begin{pmatrix} x_{v,1,1} & x_{v,2,1} & \Lambda & \Lambda & x_{v,L,1} \\ x_{v,1,2} & x_{v,2,2} & \Lambda & \Lambda & x_{v,L,2} \\ M & O & O & O & M \\ x_{v,1,M} & x_{v,2,M} & \Lambda & \Lambda & x_{v,L,M} \end{pmatrix} \qquad \ldots (6)$$

In Equation (6), each row corresponds to M receive antennas and each column corresponds to a codeword length L. That is, in Equation (6), $X_{v,i,p}$ denotes an $i^{th}$ block received through a $p^{th}$ receive antenna in the $v^{th}$ time interval. Herein, p denotes the index of a receive antenna.

If signals except for $X_v X_{(v+1)}$ in Equation (5) are newly defined by means of noise $N_{(v+1)}$, the signals may be expressed by Equation (7) below.

$$X_{(v+1)} = X_v Y_{(v+1)} + N_{(v+1)} \qquad \ldots (7)$$

As such, the reception signals $X_{(v+1)}$ in the $(v+1)^{th}$ time interval, which are received through the M receive antennas, are input to the delayer 210 and the MIMO detector 230. The delayer 210 delays the reception signals $X_{(v+1)}$ by a preset time period, i.e. one time interval, and outputs the delayed signals to the equivalent channel matrix generator 220. The one time interval denotes a time interval in which all the codewords are transmitted. Accordingly, when the receiver 200 receives the reception signals $X_{(v+1)}$, the delayer 210 outputs the reception signals $X_v$ in the $v^{th}$ time interval.

Then, the equivalent channel matrix generator 220 receives the reception signals $X_v$ in the $v^{th}$ time interval, which are from the delayer 210, to generate an equivalent matrix $\{H_{v+1,i}\}$, and outputs the equivalent matrix $\{H_{v+1,i}\}$ to the MIMO detector 230. Since an operation by which the equivalent channel matrix generator 220 generates the equivalent matrix $\{H_{v+1,i}\}$ will be described in detail later, details will be omitted here.

The MIMO detector 230 demodulates the reception signals $X_{(v+i)}$ in the $(v+1)^{th}$ time interval by using the equivalent matrix $\{H_{v+1,i}\}$ to correspond to the scheme applied by the transmitter 100, and outputs the demodulated signals to the symbol demapper 240. Hereinafter, the signals output from the MIMO detector 230 will be referred to as a demodulation symbol, and a demodulation symbol output from the MIMO detector 230 will be expressed by $\{\hat{z}_{v+1,i,j}\}$.

The symbol demapper 240 demaps the demodulation symbol $\{\hat{z}_{v+1,i,j}\}$ by using a symbol demapping scheme corresponding to the symbol mapping scheme applied by the symbol mapper 110, thereby restoring the demodulation symbol to binary bits. The binary bits may be information data bits before coding, or coded bits into which the information data bits have been coded by using a preset coding scheme. However, since the binary bits have no direct connection to the present invention, details will be omitted here.

As described in FIG. 1, when the differential space-time coding modulation scheme provided by the present invention is used, a transmitter need not limit available modulation schemes and also need not limit supportable symbol transmission rates, and a receiver can restore signals transmitted from the transmitter even without estimating separate Channel State Information .

FIG. 2 is a block diagram schematically illustrating the structure of the transmission matrix generator 120 in FIG. 1. Referring to FIG. 2, the transmission matrix generator 120 includes a $Z_{(v+1)}$ matrix generator 121 and a Gram-Schumidt scheme processor 123.

scheme processor 123.

As described in FIG. 1, the modulation symbol $\{z_{v+1, i, j}\}$ output from the symbol mapper 110 is input to the $Z_{(v+1)}$ matrix generator 121. The $Z_{(v+1)}$ matrix generator 121 receives the modulation symbol $\{z_{v+1,i,j}\}$ to generate a matrix $Z_{(v+1)}$, and outputs the matrix $Z_{(v+1)}$ to the Gram-Schumidt scheme processor 123. That is, the $z_{(v+1)}$ matrix generator 121 receives the modulation symbol $\{z_{v+1, i, j}\}$ to generate the matrix $Z_{(v+1)}$ as expressed by Equation (8) below.

$$
Z_{v+1} =
\begin{pmatrix}
\alpha_{1,1} z_{v+1,1,1} & 0 & \cdots & 0 & 0 \\
\alpha_{1,2} z_{v+1,1,2} & \alpha_{2,1} z_{v+1,2,1} & \cdots & 0 & 0 \\
0 & \alpha_{2,2} z_{v+1,2,2} & \cdots & 0 & 0 \\
0 & 0 & \cdots & 0 & 0 \\
\vdots & \vdots & \ddots & \vdots & \vdots \\
0 & 0 & \cdots & \alpha_{L-1,1} z_{v+1,L-1,1} & 0 \\
0 & 0 & \cdots & \alpha_{L-1,2} z_{v+1,L-1,2} & \alpha_{L,1} z_{v+1,L,1}
\end{pmatrix}
$$

$$
\ldots (8)
$$

In Equation (8), $\alpha_{i,j}$ denotes a normalization weight multiplied to an $i^{th}$ block transmitted through an $j^{th}$ transmit antenna, and the matrix $Z_{(v+1)}$ is a dual diagonal matrix. The matrix $Z_{(v+1)}$ is a matrix when it is assumed that the transmitter 100 uses two transmit antennas, i.e. the first and second transmit antennas.

The Gram-Schumidt scheme processor 123 applies a Gram-Schumidt scheme to the matrix $Z_{(v+1)}$ output from the $Z_{(v+1)}$ matrix generator 121, thereby generating the unitary space-time matrix $Y_{(v+1)}$. Hereinafter, an operation for generating the unitary space-time matrix $Y_{(v+1)}$ by applying the Gram-Schumidt scheme to the matrix $z_{(v+1)}$ will be described in detail.

First, it is assumed that respective nonzero column vectors in the matrix $Z_{(v+1)}$ are $(V_1, v_2, v_3, \ldots, v_L)$ and respective column vectors in the unitary space-unitary space-time matrix $Y_{(v+1)}$ is generated as expressed by Equation (9) below.

$$
u_1 = k_1 v_1 \qquad \ldots \ldots (9)
$$

In Equation (9), $k_1$ is a weight applied in order to generate the first column vector $u_1$ of the unitary space-time matrix $Y_{(v+1)}$. Herein, $k_1$ exceeding zero ($k_1 > 0$) must be selected such that the first column vector $u_1$ becomes a unit vector ($|u_1| = 1$). In the present invention, $k_1$ is set to $\dfrac{1}{|v_1|}$ $\left( k_1 = \dfrac{1}{|v_1|} \right).$

As a result of applying the Gram-Schumidt scheme, when i does not have a value of 1, i.e. i = 2, 3, ..., L, the second to $L^{th}$ column vectors $u_2$ to $u_L$ of the unitary space-time matrix $Y_{(v+1)}$ are generated as expressed by Equation (10) below.

$$
u_i = k_i ( v_i - <v_1,u_1> u_1 - v_i,u_2> u_2 - \ldots - < v_i,u_{i-1}> u_{i-1}) \qquad \ldots (10)
$$

As expressed by Equation (10), $k_i$ exceeding zero ($k_i > 0$) must be selected so as to satisfy ($|u_1| = 1$). Herein, $k_i$ is a weight applied in order to generate an $i^{th}$ column vector $u_i$ of the unitary space-time matrix $Y_{(v+1)}$ and $k_i$ exceeding zero ($k_i > 0$) must be selected in such a manner that the $i^{th}$ column vector $u_i$ becomes a unit vector ($|u_i| = 1$). Accordingly, the unitary space-time matrix $Y_{(v+1)}$ is generated to be a matrix corresponding to the characteristics of the matrix $z_{(v+1)}$

by using the Gram-Schumidt scheme. When the transmitter 100 uses two transmit antennas, column vectors of the unitary space-time matrix $Y_{(v+1)}$, e.g. the first column vector $u_1$, the $i^{th}$ column vector $u_i$ and the $L^{th}$ column vector $u_L$ can be expressed by Equations (11) to (13) below.

$$u_1 = k_1 \begin{pmatrix} \alpha_{11} z_{v+1,1,1} \\ \alpha_{12} z_{v+1,1,2} \\ 0 \\ M \\ 0 \end{pmatrix} \quad \dots \text{(11)}$$

$$u_i = k_i \begin{pmatrix} \alpha_{i1} z_{v+1,i,1} u^{*}_{(i-1)i} u_{(i-1)1} \\ \alpha_{i1} z_{v+1,i,1} u^{*}_{(i-1)i} u_{(i-1)2} \\ \cdot \\ \cdot \\ \cdot \\ \alpha_{i1} z_{v+1,i,1}(1 - E_{u_{(i-1)i}}) \\ \alpha_{i2} z_{v+1,i,2} \\ 0 \\ \cdot \\ \cdot \\ \cdot \\ 0 \end{pmatrix}$$

$$\dots \text{(12)}$$

$$u_L = k_L \begin{pmatrix} \alpha_{L1} z_{v+1,L,1} u^{*}_{(L-1)L} u_{(L-1)1} \\ \alpha_{L1} z_{v+1,L,1} u^{*}_{(L-1)L} u_{(L-1)2} \\ \cdot \\ \cdot \\ \cdot \\ \alpha_{L1} z_{v+1,L,1}(1 - E_{u_{(L-1)L}}) \end{pmatrix}$$

$$\dots \text{(13)}$$

Hereinafter, an operation for determining the normalization weight $a_{i,j}$ will be described in detail. According to the present invention, in determining the normalization weight $\alpha_{i,j}$, it is necessary to consider a forcing condition in which respective signals transmitted through the first and second transmit antennas in the $(v+1)^{th}$ time interval in the $i^{th}$ column vector $u_i$ of the unitary space-time matrix $Y_{(v+1)}$ must have the same energy. That is, $z_{v+1,i,1}$ must have the same energy as that of $z_{v+1,i,2}$. This is for minimizing the equal error protection and pair-wise error probability of $z_{v+1,i,1}$ and $z_{v+1,i,2}$.

Under the forcing condition, the normalization weight $\alpha_{i,j}$ is determined corresponding to the block index i. First, when the block index i has a value of 1 (i = 1), the normalization weight $\alpha_{i,j}$ is determined as expressed by Equation (14) below.

$$| \alpha_{11}|^2| z_{v+1,1,1}| = | \alpha_{12}|^2| z_{v+1,1,2}| = 0.5 \qquad \ldots\ldots(14)$$

As expressed by Equation (14), when the block index i has a value of 1, $\alpha_{11} = \alpha_{12} = \dfrac{1}{\sqrt{2}}$.

Second, when the block index i has a value of (2, 3, ..., L-1), the normalization weight $\alpha_{i,j}$ is determined as expressed by Equation (15) below.

$$|\alpha_{i1}|^2|z_{v+1,i,1}|^2\{E_{u_{(i-1)i}} \sum_{j=1}^{i-1}E_{u_{(i-1)j}} + (1 - E_{u_{(i-1)i}})^2\} = |\alpha_{i2}|^2|z_{v+1,i,2}|^2 = 0.5$$

$$\ldots\ldots(15)$$

In Equation (15), $E_{u(l-1)i}$ denotes the energy of $u_{(i-1)i}$. As expressed by Equation (15), when the block index i has a value of (2, 3, ..., L-1), then $\alpha_{i1} = 1$, $\alpha_{i2} = \dfrac{1}{\sqrt{2}}$.

Third, when the block index i has a value of L (i = L), the normalization weight $\alpha_{i,j}$ is determined as expressed by Equation (16) below.

$$|\alpha_{L1}|^2|z_{v+1,L,1}|^2 \left\{ E_{u_{(L-1)L}} \sum_{j=1}^{L-1}E_{u_{(L-1)j}} + (1 - E_{u_{(L-1)L}})^2 \right\} = 1 \qquad \ldots(16)$$

As expressed by Equation (16), when the block index i has a value of L, then $\alpha_{L1} = \sqrt{2}$

Hereinafter, an operation by which the receiver 200 restores the binary bits transmitted from the transmitter 100, i.e. an operation of the equivalent channel matrix generator 220, will be described in detail. First, signals received in the receiver 200 in the $(v+1)^{th}$ time interval can be modeled by Equation (17) below.

$$X_{v+1,.,i} = X_v u_i + N_{v+1,.,i} \qquad \ldots(17)$$

Further, a linear signal model in the receiver 200 can be expressed by Equation (18) below when the block index i has a value of 1 (i = 1).

$$\begin{bmatrix} x_{v+1,1,1} \\ x_{v+1,1,2} \\ M \\ x_{v+1,1,M} \end{bmatrix} = \frac{1}{\sqrt{2}} \begin{bmatrix} x_{v,1,1} & x_{v,2,1} \\ x_{v,1,2} & x_{v,2,2} \\ M & M \\ x_{v,1,M} & x_{v,2,M} \end{bmatrix} \begin{bmatrix} z_{v+1,1,1} \\ z_{v+1,1,2} \end{bmatrix} + \begin{bmatrix} n_{v+1,1,1} \\ n_{v+1,1,2} \\ M \\ n_{v+1,1,M} \end{bmatrix} \qquad \ldots(18)$$

$$\equiv H_{v+1,1}$$

Also, the linear signal model in the receiver 200 can be expressed by Equation (19) below when the block index i has a value of (2, 3, ..., L-1) (i = 2, 3, ..., L-1).

$$\begin{bmatrix} x_{v+1,i,1} \\ x_{v+1,i,2} \\ M \\ x_{v+1,i,M} \end{bmatrix} = \begin{bmatrix} -\sum_{j=1}^{i-1} x_{v,j,1} u_{(i-1)i}^* u_{(i-1)j} + x_{v,i,1}(1 - E_{u_{(i-1)i}}) & \dfrac{1}{\sqrt{2}} x_{v,2,1} \\ -\sum_{j=1}^{i-1} x_{v,j,2} u_{(i-1)i}^* u_{(i-1)j} + x_{v,i,2}(1 - E_{u_{(i-1)i}}) & \dfrac{1}{\sqrt{2}} x_{v,2,2} \\ M \\ -\sum_{j=1}^{i-1} x_{v,j,M} u_{(i-1)i}^* u_{(i-1)j} + x_{v,i,M}(1 - E_{u_{(i-1)i}}) & \dfrac{1}{\sqrt{2}} x_{v,2,M} \end{bmatrix} \begin{bmatrix} z_{v+1,i,1} \\ z_{v+1,i,2} \end{bmatrix} + \begin{bmatrix} n_{v+1,i,1} \\ n_{v+1,i,2} \\ M \\ n_{v+1,i,M} \end{bmatrix}$$

$$\equiv H_{v+1,i}$$

....(19)

As described above, when the differential SM scheme according to the present invention is used, the receiver 200 needs not separately estimate the CSI, and thus the degree of complexity of a receiver caused by CSI estimation is reduced.

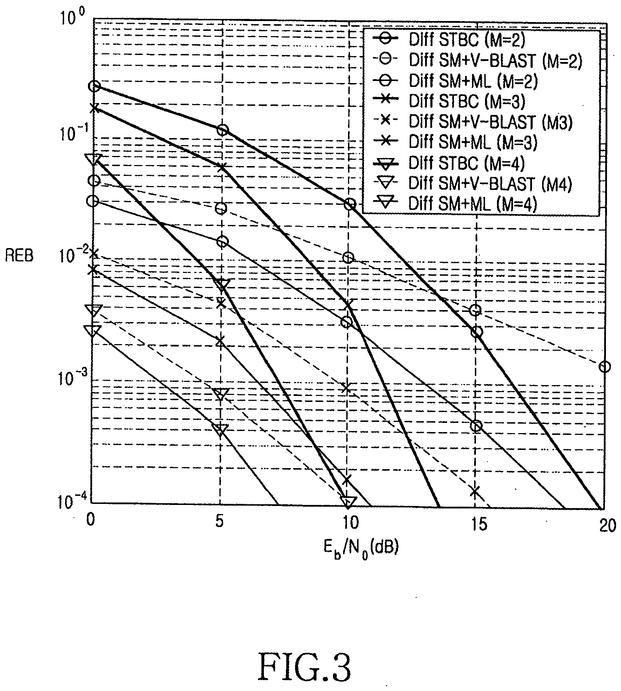

Hereinafter, a comparison between performance achieved when the MIMO mobile communication system uses a general differential space-time block coding scheme and performance achieved when the MIMO mobile communication system uses the differential SM scheme according to the present invention will be described with reference to FIG. 3.

FIG. 3 is a graph illustrating a comparison between performance achieved when the MIMO mobile communication system uses the general differential space-time block coding scheme and performance achieved when the MIMO mobile communication system uses the differential SM scheme according to the present invention.

Referring to FIG. 3, performance graphs illustrated in FIG. 3 denote performance graphs when it is assumed that the number of transmit antennas used in a transmitter is 2 (N = 2), the number of receive antennas used in a receiver is two (M = 2), three (M = 3) or four (M = 4), and a codeword has a length of 2 (L = 2), i.e. a codeword includes two blocks.

Further, according to the graphs obtained when a general differential space-time block coding scheme is used, a rate of 1, i.e. a symbol transmission rate of 1 is applied because limitation exists in the symbol transmission rate, and an available modulation scheme is also limited to PSK(Phase Shift Keying) modulation schemes as described in the conventional art. In other words, the graphs correspond to performance graphs when an 8PSK scheme is applied.

However, according to the graphs obtained when the differential SM scheme according to the present invention is used, there is no limitation in transmission rates. Simply, the graphs correspond to performance graphs when a Quadrature Phase Shift Keying (QPSK) scheme is applied. Accordingly, a receiver needs not estimate the CSI, and can use predetermined schemes using the CSI, e.g. a Vertical-Bell Laboratory Layered Space-Time (V-BLAST) scheme or a Maximum Likelihood (ML) scheme.

As illustrated in FIG. 3, it can be understood that performance is improved when the differential SM scheme according to the present invention is used, as compared to a case where a general differential space-time block coding scheme is used. That is, when a transmitter uses two transmit antennas, and a receiver uses four receive antennas and employs an ML scheme, the differential SM scheme according to the embodiment of the present invention shows the best performance.

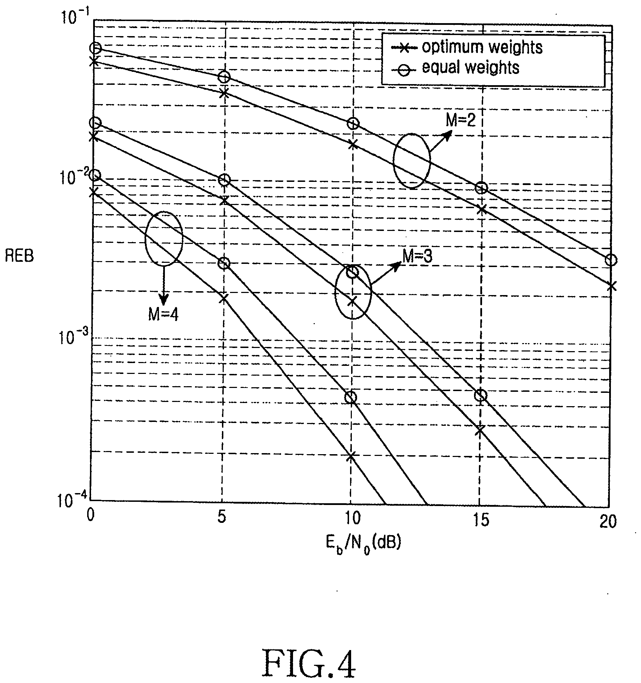

Hereinafter, a comparison between performances achieved when the MIMO mobile communication system applies a normalization weight according to the present invention and performance achieved when the MIMO mobile communication system does not apply the normalization weight will be described herein with reference to FIG. 4.

FIG. 4 is a graph illustrating a comparison between performance achieved when the MIMO mobile communication system applies the normalization weight according to the present invention and performance achieved when the MIMO mobile communication system does not apply the normalization weight. Referring to FIG. 4, performance graphs illustrated in FIG. 4 denote performance graphs when the number of transmit antennas used in a transmitter is 2 (N = 2), the number of receive antennas used in a receiver is two (M = 2), three (M = 3) or four (M = 4), a codeword has a length of 4 (L = 4), i.e. a codeword includes four blocks, a QPSK scheme is used as a modulation scheme, and the receiver uses a linear Minimum Mean Squared Error (MMSE) detector.

As illustrated in FIG. 4, with the increase in the number of receive antennas, it can be understood that the performance ( i.e., expressed by optimal weights) achieved when the normalization weight is applied is more improved, as compared to the performance (i.e., expressed by equal weights) achieved when the normalization weight is not applied.

As described above, the present invention provides a system and a method for transmitting/receiving signals in a MIMO mobile communication system, in which no limitation exists in available modulation schemes, supportable symbol transmission rates are also not limited, and the CSI estimation by a receiver is not necessary.

That is, it is possible to support a high symbol transmission rate which cannot be supported by a differential space-time block coding scheme generally used in a MIMO mobile communication system. Further, a receiver-side need not estimate a CSI, so that the degree of complexity of a receiver can be reduced. Furthermore, the average power problem of transmission signals is solved and thus it is not necessary to limit available modulation schemes, so that flexible signal transmission/reception is possible.

**Claims**

1. A method for transmitting signals by a transmitter in a mobile communication system using a multiple input multiple output, MIMO, scheme, the method comprising:

    generating a first matrix in form of a dual diagonal matrix to correspond to a codeword;
    generating a unitary space-time matrix from the dual diagonal matrix based on a Gram-Schmidt scheme;
    multiplying the unitary space-time matrix by a first final transmission matrix denoting signals transmitted in a second time interval before the first time interval, thereby generating a second final transmission matrix denoting signals to be transmitted in the first time interval; and
    transmitting signals corresponding to the second final transmission matrix through a plurality of transmit antennas in the first time interval.

2. The method as claimed in claim 1, wherein the first matrix is expressed by

$$Z_{v+1} = \begin{pmatrix} \alpha_{1,1}z_{v+1,1,1} & 0 & \cdots & 0 & 0 \\ \alpha_{1,2}z_{v+1,1,2} & \alpha_{2,1}z_{v+1,2,1} & \cdots & 0 & 0 \\ 0 & \alpha_{2,2}z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1}z_{v+1,L-1,1} & 0 \\ 0 & 0 & \cdots & \alpha_{L-1,2}z_{v+1,L-1,2} & \alpha_{L,1}z_{v+1,L,1} \end{pmatrix}$$

when a number of the plurality of transmit antennas is two, wherein, $Z_{v+1}$ denotes the first matrix, $z_{v+1,i,j}$ denotes the codeword, i denotes an index representing blocks constituting the codeword, v denotes an index representing a time interval, j denotes an index representing a transmit antenna, L denotes a number of blocks constituting the codeword, and $\alpha_{i,j}$ denotes a normalization weight multiplied to an $i^{th}$ block transmitted through a $j^{th}$ transmit antenna of the plurality of transmit antennas.

3. The method as claimed in claim 2, wherein generating the unitary space-time matrix from the first matrix by using the Gram-Schmidt scheme comprises:

    setting respective nonzero column vectors of the first matrix as $(v_1, v_2, v_3, \dots, v_L)$ and setting respective column vectors of the unitary space-time matrix as $(u_1, u_2, u_3, \dots, u_L)$; and
    generating a first column vector $u_1$ of the unitary space-time matrix from the first column vector $v_1$ of the first matrix as expressed by $u_1 = k_1 v_1$, and generating a second column vector $u_2$ to an $L^{th}$ column vector $u_L$ of the unitary space-time matrix from the second column vector $v_2$ to an $L^{th}$ column vector $v_L$ of the first matrix as expressed by an = $k_i(v_i - <v_1,u_1> u_1 - v_i,u_2> u_2 - \dots - < v_i,u_i-1 > u_{i-1})$,
    wherein $k_1$ exceeding zero ($k_1 > 0$) must be selected so as to satisfy($|u_1| = 1$).

4. The method as claimed in claim 3, wherein the first column vector $u_1$ of the unitary space-time matrix is expressed by

$$u_1 = k_1 \begin{pmatrix} \alpha_{11} z_{v+1,1,1} \\ \alpha_{12} z_{v+1,1,2} \\ 0 \\ \vdots \\ 0 \end{pmatrix}.$$

**5.** The method as claimed in claim 3, wherein an $i^{th}$ column vector $u_i$ of the unitary space-time matrix is expressed by an

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \cdot \\ \cdot \\ \cdot \\ \alpha_{i1} z_{v+1,i,1} (1 - E_{u_{(i-1)i}}) \\ \alpha_{i2} z_{v+1,i,2} \\ 0 \\ \cdot \\ \cdot \\ \cdot \\ 0 \end{pmatrix}$$

.

**6.** The method as claimed in claim 3, wherein the $L^{th}$ column vector $u_L$ of the unitary space-time matrix is expressed by an

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \cdot \\ \cdot \\ \cdot \\ \alpha_{L1} z_{v+1,L,1} (1 - E_{u_{(L-1)L}}) \end{pmatrix}$$

**7.** The method as claimed in claim 3, wherein the normalization weight $\alpha_{i,j}$ multiplied to a first block is expressed by an

$$|\alpha_{11}|^2 |z_{v+1,1,1}| = |\alpha_{12}|^2 |z_{v+1,1,2}| = 0.5.$$

**8.** The method as claimed in claim 3, wherein the normalization weight $\alpha_{i,j}$ multiplied to a second block to a $(L-1)^{th}$

block is expressed by an

$$\alpha_{i1}|^2|z_{v+1,i,1}|^2\{E_{u_{(i-1)i}}\sum_{j=1}^{i-1}E_{u_{(i-1)j}}+(1-E_{u_{(i-1)i}})^2\}=|\alpha_{i2}|^2|z_{v+1,i,2}|^2=0.5$$

wherein, $E_{u_{(i-1)i}}$ denotes energy of $u_{(i-1)i}$.

9. The method as claimed in claim 3, wherein the normalization weight $\alpha_{i,j}$ multiplied to an $L^{th}$ block is expressed by an

$$|\alpha_{L1}|^2|z_{v+1,L,1}|^2\left\{E_{u_{(L-1)L}}\sum_{j=1}^{L-1}E_{u_{(L-1)j}}+(1-E_{u_{(L-1)L}})^2\right\}=1,$$

wherein, $E_{u_{(i-1)i}}$ denotes energy of $u_{(i-1)i}$.

10. A transmitter for transmitting signals in a mobile communication system using a multiple input multiple output, MIMO, scheme, the transmitter comprising:

a transmission matrix generator (120) configured to generate a first matrix in form of a dual diagonal matrix to correspond to a codeword, and to generate a unitary space-time matrix from the dual diagonal matrix by using a Gram-Schmidt scheme;
a multiplier (130) configured to multiply the unitary space-time matrix by a first final transmission matrix denoting signals transmitted in a second time interval before the first time interval, thereby generating a second final transmission matrix denoting signals to be transmitted in the first time interval; and
a radio frequency, RF, processor configured to transmit signals corresponding to the second final transmission matrix through a plurality of transmit antennas in the first time interval.

11. The transmitter as claimed in claim 10, wherein the first matrix is expressed by

$$Z_{v+1}=\begin{pmatrix} \alpha_{1,1}z_{v+1,1,1} & 0 & \cdots & 0 & 0 \\ \alpha_{1,2}z_{v+1,1,2} & \alpha_{2,1}z_{v+1,2,1} & \cdots & 0 & 0 \\ 0 & \alpha_{2,2}z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1}z_{v+1,L-1,1} & 0 \\ 0 & 0 & \cdots & \alpha_{L-1,2}z_{v+1,L-1,2} & \alpha_{L,1}z_{v+1,L,1} \end{pmatrix},$$

when a number of the plurality of transmit antennas is two, wherein, $Z_{v+1}$ denotes the first matrix, $z_{v+1,i,j}$ denotes the codeword, i denotes an index representing blocks constituting the codeword, v denotes an index representing a time interval, j denotes an index representing a transmit antenna, L denotes a number of blocks constituting the codeword, and $\alpha_{i,j}$ denotes a normalization weight multiplied to an $i^{th}$ block transmitted through a $j^{th}$ transmit antenna of the plurality of transmit antennas.

12. The transmitter as claimed in claim 11, wherein transmission matrix generator is configured to:

set respective nonzero column vectors of the first matrix as $(v_1, v_2, v_3, ... , v_L)$, sets respective column vectors of the unitary space-time matrix as $(u_1, u_2, u_3, ... , u_L)$, and
generate a first column vector $u_1$ of the unitary space-time matrix from the first column vector $v_1$ of the first matrix as expressed by $u_1 = k_1v_1$, and generates a second column vector $u_2$ to an $L^{th}$ column vector $u_L$ of the unitary space-time matrix from the second column vector $v_2$ to an $L^{th}$ column vector $v_L$ of the first matrix as expressed by $u_i = k_i(v_i - <v_1,u_1> u_1 - v_i,u_2 > u_2 - ... - < v_i,u_{i-1} > u_{i-1})$,
wherein $k_1$ exceeding zero $(k_1 > 0)$ must be selected so as to satisfy$(|u_1| = 1)$.

13. The transmitter as claimed in claim 12, wherein the first column vector $u_1$ of the unitary space-time matrix is expressed by

$$u_1 = k_1 \begin{pmatrix} \alpha_{11} z_{v+1,1,1} \\ \alpha_{12} z_{v+1,1,2} \\ 0 \\ \vdots \\ 0 \end{pmatrix}.$$

**14.** The transmitter as claimed in claim 12, wherein an $i^{th}$ column vector $u_i$ of the unitary space-time matrix is expressed by

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \cdot \\ \cdot \\ \cdot \\ \alpha_{i1} z_{v+1,i,1} (1 - E_{u_{(i-1)i}}) \\ \alpha_{i2} z_{v+1,i,2} \\ 0 \\ \cdot \\ \cdot \\ \cdot \\ 0 \end{pmatrix}.$$

**15.** The transmitter as claimed in claim 12, wherein the $L^{th}$ column vector $u_L$ of the unitary space-time matrix is expressed by

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \cdot \\ \cdot \\ \cdot \\ \alpha_{L1} z_{v+1,L,1} (1 - E_{u_{(L-1)L}}) \end{pmatrix}.$$

**16.** The transmitter as claimed in claim 12, wherein a normalization weight $\alpha_{i,j}$ multiplied to a first block is expressed by

$|\alpha_{11}|^2 |z_{v+1,1,1}| = |\alpha_{12}|^2 |z_{v+1,1,2}| = 0.5.$

**17.** The transmitter as claimed in claim 12, wherein a normalization weight $\alpha_{i,j}$ multiplied to a second block to a $(L-1)^{th}$ block is expressed by

$$\alpha_{i1}|^2|z_{v+1,i,1}|^2\{E_{u_{(i-1)i}}\sum_{j=1}^{i-1}E_{u_{(i-1)i}}+(1-E_{u_{(i-1)i}})^2\}=|\alpha_{i2}|^2|z_{v+1,i,2}|^2=0.5,$$

wherein, $E_{u(i-1)i}$ denotes energy of $u_{(i-1)i}$.

**18.** The transmitter as claimed in claim 12, wherein a normalization weight $\alpha_{i,j}$ multiplied to an $L^{th}$ block is expressed by

$$\left|\alpha_{L1}\right|^2\left|z_{v+1,L,1}\right|^2\left\{E_{u_{(L-1)L}}\sum_{j=1}^{L-1}E_{u_{(L-1)j}}+(1-E_{u_{(L-1)L}})^2\right\}=1,$$

wherein, $E_{u(i-1)i}$ denotes energy of $u_{(i-1)i}$.

**Patentansprüche**

**1.** Verfahren zum Übertragen von Signalen durch einen Sender in einem mobilen Kommunikationssystem unter Verwendung eines Multiple-Input-Multiple-Output, MIMO, Schemas, wobei das Verfahren umfasst:

Erzeugen einer ersten Matrix in Form einer dualen diagonalen Matrix um einem Codewort zu entsprechen;
Erzeugen einer unitären Raum-Zeit-Matrix aus der dualen diagonalen Matrix basierend auf einem Gram-Schmidt Schema;
Multiplizieren der unitären Raum-Zeit-Matrix mit einer ersten finalen Übertragungsmatrix, die Signale bezeichnet, die in einem zweiten Zeitintervall vor dem ersten Zeitintervall übertragen werden, wodurch eine zweite finale Übertragungsmatrix erzeugt wird, die Signale bezeichnet, die in dem ersten Zeitintervall übertragen werden sollen; und
Übertragen von Signalen, die der zweiten finalen Übertragungsmatrix entsprechen, durch eine Vielzahl von Sendeantennen in dem ersten Zeitintervall.

**2.** Verfahren wie in Anspruch 1 beansprucht, wobei die erste Matrix ausgedrückt wird durch

$$Z_{v+1}=\begin{pmatrix} \alpha_{1,1}z_{v+1,1,1} & 0 & \cdots & 0 & 0 \\ \alpha_{1,2}z_{v+1,1,2} & \alpha_{2,1}z_{v+1,2,1} & \cdots & 0 & 0 \\ 0 & \alpha_{2,2}z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1}z_{v+1,L-1,1} & 0 \\ 0 & 0 & \cdots & \alpha_{L-1,2}z_{v+1,L-1,2} & \alpha_{L,1}z_{v+1,L,1} \end{pmatrix}$$

wenn eine Anzahl der Vielzahl von Sendeantenne zwei ist, wobei $Z_{v+1}$ die erste Matrix bezeichnet, $z_{v+1,i,j}$ das Codewort bezeichnet, i einen Index bezeichnet, der Blöcke repräsentiert, die das Codewort bilden, v einen Index bezeichnet, der ein Zeitintervall repräsentiert, j einen Index bezeichnet, der eine Sendeantenne repräsentiert, L eine Anzahl von Blöcken bezeichnet, die das Codewort bilden, und $\alpha_{i,j}$ eine Normierungswichtung bezeichnet, die an einen $i^{ten}$ Block multipltiziert wird, der durch eine $j^{te}$ Sendeantenne der Vielzahl von Sendeantennen übertragen wird.

**3.** Verfahren wie in Anspruch 2 beansprucht, wobei das Erzeugen der unitären Raum-Zeit-Matrix aus der ersten Matrix durch Verwendung des Gram-Schmidt Schemas umfasst:

Setzen jeweiliger von Null verschiedener Spaltenvektoren der ersten Matrix als ($v_1$, $v_2$, $v_3$, ... , $v_L$) und Setzen jeweiliger Spaltenvektoren der unitären Raum-Zeit-Matrix als ($u_1$, $u_2$, $u_3$, ... , $u_L$); und
Erzeugen eines ersten Spaltenvektors $u_1$ der unitären Raum-Zeit-Matrix aus dem ersten Spaltenvektor $v_1$ der ersten Matrix wie durch $u_1 = k_1v_1$ ausgedrückt, und Erzeugen eines zweiten Spaltenvektors $u_2$ zu einem $L^{ten}$ Spaltenvektor $u_L$ der unitären Raum-Zeit-Matrix aus dem zweiten Spaltenvektor $v_2$ zu einem $L^{ten}$ Spaltenvektor der ersten Matrix wie durch $an = k_i(v_i- <v_1,u_1> u_1 - v_i,u_2 > u_2- ... - < v_i,u_{i-1} > u_{i-1})$ ausgedrückt,

wobei $k_1$ größer Null ($k_1 > 0$) so ausgewählt werden muss, dass ($|u_1| = 1$) erfüllt ist.

4. Verfahren wie in Anspruch 3 beansprucht, wobei der erste Spaltenvektor $u_1$ der unitären Raum-Zeit-Matrix ausgedrückt wird durch

$$u_1 = k_1 \begin{pmatrix} \alpha_{11} z_{v+1,1,1} \\ \alpha_{12} z_{v+1,1,2} \\ 0 \\ \vdots \\ 0 \end{pmatrix}.$$

5. Verfahren wie in Anspruch 3 beansprucht, wobei ein $i^{\text{ter}}$ Spaltenvektor $u_i$ der unitären Raum-Zeit-Matrix ausgedrückt wird durch ein

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \vdots \\ \alpha_{i1} z_{v+1,i,1} (1 - E_{u_{(i-1)i}}) \\ \alpha_{i2} z_{v+1,i,2} \\ 0 \\ \vdots \\ 0 \end{pmatrix}.$$

6. Verfahren wie in Anspruch 3 beansprucht, wobei der $L^{\text{te}}$ Spaltenvektor $u_L$ der unitären Raum-Zeit-Matrix ausgedrückt wird durch ein

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \vdots \\ \alpha_{L1} z_{v+1,L,1} (1 - E_{u_{(L-1)L}}) \end{pmatrix}.$$

7. Verfahren wie in Anspruch 3 beansprucht, wobei die Normierungswichtung $\alpha_{i,j}$, die an einen ersten Block multipliziert wird, ausgedrückt wird durch ein

$$|\alpha_{11}|^2|z_{v+1,1,1}| = |\alpha_{12}|^2|z_{v+1,1,2}| = 0.5.$$

8. Verfahren wie in Anspruch 3 beansprucht, wobei die Normierungswichtung $\alpha_{i,j}$, die an einen zweiten Block zu einem $(L-1)^{\text{ten}}$ Block multipliziert wird, ausgedrückt wird durch ein

$$|\alpha_{i1}|^2|z_{v+1,i,1}|^2\{E_{u_{(i-1)i}}\sum_{j=1}^{i-1}E_{u_{(i-1)i}}+(1-E_{u_{(i-1)i}})^2\}=|\alpha_{i2}|^2|z_{v+1,i,2}|^2=0.5,$$

wobei $E_{u_{(i-1)i}}$ eine Energie von $u_{(i-1)i}$ bezeichnet.

9. Verfahren wie in Anspruch 3 beansprucht, wobei die Normierungswichtung $\alpha_{i,j}$, die an einen $L^{\text{ten}}$ Block multipliziert wird, ausgedrückt wird durch ein

$$\left|\alpha_{L1}\right|^2\left|z_{v+1,L,1}\right|^2\left\{E_{u_{(L-1)L}}\sum_{j=1}^{L-1}E_{u_{(L-1)j}}+(1-E_{u_{(L-1)L}})^2\right\}=1,$$

wobei $E_{u_{(i-1)i}}$ eine Energie von $u_{(i-1)i}$ bezeichnet.

10. Sender zum Übertragen von Signalen in einem mobilen Kommunikationssystem unter Verwendung eines Multiple-Input-Multiple-Output, MIMO, Schemas, wobei der Sender umfasst:

  einen Übermittlungs-Matrix-Generator (120), der konfiguriert ist zum Erzeugen einer ersten Matrix in Form einer dualen diagonalen Matrix um einem Codewort zu entsprechen und zum Erzeugen einer unitären Raum-Zeit-Matrix aus der dualen diagonalen Matrix unter Verwendung eines Gram-Schmidt Schema;
  einen Multiplikator (130), der konfiguriert ist zum Multiplizieren der unitären Raum-Zeit-Matrix mit einer ersten finalen Übertragungsmatrix, die Signale bezeichnet, die in einem zweiten Zeitintervall vor dem ersten Zeitintervall übertragen werden, wodurch eine zweite finale Übertragungsmatrix erzeugt wird, die Signale bezeichnet, die in dem ersten Zeitintervall übertragen werden sollen; und
  einen Radiofrequenz, RF, Prozessor, der konfiguriert ist zum Übertragen von Signalen, die der zweiten finalen Übertragungsmatrix entsprechen, durch eine Vielzahl von Sendeantennen in dem ersten Zeitintervall.

11. Sender wie in Anspruch 10 beansprucht, wobei die erste Matrix ausgedrückt wird durch

$$Z_{v+1}=\begin{pmatrix} \alpha_{1,1}z_{v+1,1,1} & 0 & \cdots & 0 & 0 \\ \alpha_{1,2}z_{v+1,1,2} & \alpha_{2,1}z_{v+1,2,1} & \cdots & 0 & 0 \\ 0 & \alpha_{2,2}z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1}z_{v+1,L-1,1} & 0 \\ 0 & 0 & \cdots & \alpha_{L-1,2}z_{v+1,L-1,2} & \alpha_{L,1}z_{v+1,L,1} \end{pmatrix},$$

wenn eine Anzahl der Vielzahl von Sendeantenne zwei ist, wobei $Z_{v+1}$ die erste Matrix bezeichnet, $z_{v+1,i,j}$ das Codewort bezeichnet, i einen Index bezeichnet, der Blöcke repräsentiert, die das Codewort bilden, v einen Index bezeichnet, der ein Zeitintervall repräsentiert, j einen Index bezeichnet, der eine Sendeantenne bezeichnet, L eine Anzahl von Blöcken bezeichnet, die das Codewort bilden, und $\alpha_{i,j}$ eine Normierungswichtung bezeichnet, die an einen $i^{\text{ten}}$ Block multipltiziert wird, der durch eine $j^{\text{te}}$ Sendeantenne der Vielzahl von Sendeantennen übertragen wird.

12. Sender wie in Anspruch 11 beansprucht, wobei der Übermittlungs-Matrix-Generator konfiguriert ist zum:

  Setzen jeweiliger von Null verschiedener Spaltenvektoren der ersten Matrix als $(v_1, v_2, v_3, \ldots, v_L)$, Setzen jeweiliger Spaltenvektoren der unitären Raum-Zeit-Matrix als $(u_1, u_2, u_3, \ldots, u_L)$; und

**16**

Erzeugen eines ersten Spaltenvektors $u_1$ der unitären Raum-Zeit-Matrix aus dem ersten Spaltenvektor $v_1$ der ersten Matrix wie durch $u_1 = k_1 v_1$ ausgedrückt, und Erzeugen eines zweiten Spaltenvektors $u_2$ zu einem $L^{ten}$ Spaltenvektor $u_L$ der unitären Raum-Zeit-Matrix von dem zweiten Spaltenvektor $v_2$ zu einem $L^{ten}$ Spaltenvektor der ersten Matrix wie durch $u_i = k_i(v_i - <v_1,u_1> u_1 - v_i,u_2 > u_2 - ... - < v_i,u_{i-1} > u_{i-1})$ ausgedrückt, wobei $k_1$ größer Null ($k_1 > 0$) so ausgewählt werden muss, dass ($|u_1| = 1$) erfüllt ist.

**13.** Sender wie in Anspruch 12 beansprucht, wobei der erste Spaltenvektor $u_1$ der unitären Raum-Zeit-Matrix ausgedrückt wird durch

$$u_1 = k_1 \begin{pmatrix} \alpha_{11} z_{v+1,1,1} \\ \alpha_{12} z_{v+1,1,2} \\ 0 \\ \vdots \\ 0 \end{pmatrix}.$$

**14.** Sender wie in Anspruch 12 beansprucht, wobei ein $i^{ter}$ Spaltenvektor $u_i$ der unitären Raum-Zeit-Matrix ausgedrückt wird durch

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \vdots \\ \alpha_{i1} z_{v+1,i,1} (1 - E_{u_{(i-1)i}}) \\ \alpha_{i2} z_{v+1,i,2} \\ 0 \\ \vdots \\ 0 \end{pmatrix}.$$

**15.** Sender wie in Anspruch 12 beansprucht, wobei der $L^{te}$ Spaltenvektor $u_L$ der unitären Raum-Zeit-Matrix ausgedrückt wird durch

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \vdots \\ \alpha_{L1} z_{v+1,L,1} (1 - E_{u_{(L-1)L}}) \end{pmatrix}.$$

**16.** Sender wie in Anspruch 12 beansprucht, wobei eine Normierungswichtung $\alpha_{i,j}$, die an einen ersten Block multipliziert wird, ausgedrückt wird durch

$$|\alpha_{11}|^2| z_{v+1,1,1}| = |\alpha_{12}|^2| z_{v+1,1,2}| = 0.5.$$

**17.** Sender wie in Anspruch 12 beansprucht, wobei eine Normierungswichtung $\alpha_{i,j}$, die an einen zweiten Block zu einem (L-1)ten Block multipliziert wird, ausgedrückt wird durch

$$|\alpha_{i1}|^2| z_{v+1,i,1}|^2 \{E_{u_{(i-1)i}} \sum_{j=1}^{i-1} E_{u_{(i-1)j}} + (1 - E_{u_{(i-1)i}})^2\} = |\alpha_{i2}|^2| z_{v+1,i,2}|^2 = 0.5,$$

wobei $E_{u_{(i-1)i}}$ eine Energie von $u_{(i-1)i}$ bezeichnet.

**18.** Sender wie in Anspruch 12 beansprucht, wobei eine Normierungswichtung $\alpha_{i,j}$, die an einen Lten Block multipliziert wird, ausgedrückt wird durch

$$|\alpha_{L1}|^2 |z_{v+1,L,1}|^2 \left\{ E_{u_{(L-1)L}} \sum_{j=1}^{L-1} E_{u_{(L-1)j}} + (1 - E_{u_{(L-1)L}})^2 \right\} = 1,$$

wobei $E_{u_{(i-1)i}}$ eine Energie von $u_{(i-1)i}$ bezeichnet.

## Revendications

**1.** Procédé de transmission de signaux par un émetteur dans un système de communication mobile utilisant un schéma MIMO, à sorties multiples et à entrées multiples, le procédé comprenant les opérations suivantes:

générer une première matrice sous forme d'une matrice à double diagonale pour correspondre à un mot de code;
générer une matrice unitaire espace-temps à partir de la matrice à double diagonale reposant sur un schéma de Gram-Schmidt;
multiplier la matrice espace-temps unitaire par une première matrice de transmission finale désignant des signaux transmis dans un second intervalle de temps précédant le premier intervalle de temps, générant ainsi une seconde matrice de transmission finale désignant des signaux à transmettre dans le premier intervalle de temps; et
émettre des signaux correspondant à la deuxième matrice de transmission finale par l'intermédiaire d'une pluralité d'antennes d'émission dans le premier intervalle de temps.

**2.** Procédé selon la revendication 1, dans lequel la première matrice est exprimée

$$Z_{v+1} = \begin{pmatrix} \alpha_{1,1}z_{v+1,1,1} & 0 & \cdots & 0 & 0 \\ \alpha_{1,2}z_{v+1,1,2} & \alpha_{2,1}z_{v+1,2,1} & \cdots & 0 & 0 \\ 0 & \alpha_{2,2}z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1}z_{v+1,L-1,1} & 0 \\ 0 & 0 & \cdots & \alpha_{L-1,2}z_{v+1,L-1,2} & \alpha_{L,1}z_{v+1,L,1} \end{pmatrix}$$

lorsqu'un nombre de la pluralité d'antennes d'émission est égal à deux, dans lequel $Z_{v+1}$ désigne la première matrice, $Z_{v+1,i,j}$ représente le mot de code, i désigne un index représentant des blocs constituant le mot de code, v désigne un indice représentant un intervalle de temps, j désigne un indice représentant une antenne d'émission, L désigne un nombre de blocs constituant le mot de code et ay désigne un poids de normalisation multiplié par un i-[ième] bloc transmis par une j-[ième] antenne d'émission de la pluralité d'antennes d'émission.

3. Procédé selon la revendication 2, **caractérisé en ce que** la génération de la matrice espace-temps unitaire à partir de la première matrice en utilisant le schéma de Gram-Schmidt comprend les opérations suivantes:

   définir des vecteurs de colonne non nuls respectifs de la première matrice en tant que ($v_1$, $v_2$, $v_3$, ... , $v_L$) et définir des vecteurs de colonne respectifs de la matrice espace-temps unitaire en tant que ($u_1$, $u_2$, $u_3$, ... , $u_L$); et générer un premier vecteur de colonne $u_1$ de la matrice espace-temps unitaire à partir du premier vecteur de colonne $v_1$ de la première matrice, exprimé par $u_1 = k_1v_1$, et générer un second vecteur de colonne $u_2$ en un L-[ième] vecteur de colonne $u_L$ de la matrice espace-temps unitaire du second vecteur de colonne $v_2$ à un L-[ième] vecteur de colonne $v_i$ de la première matrice telle qu'exprimée par un = $k_i(v_i$- <$v_1$,$u_1$> $u_1$ - $V_i$, $U_2$> $U_2$-... - < $v_i.u_{i-1}$ > $u_{i-1}$),
   où ki dépassant zéro ($k_i > 0$) doit être sélectionné de manière à satisfaire ($|u_1|$ = 1).

4. Procédé selon la revendication 3, **caractérisé en ce que** le vecteur de première colonne $u_1$ de la matrice unitaire espace-temps est exprimé par

$$u_1 = k_1 \begin{pmatrix} \alpha_{11}z_{v+1,1,1} \\ \alpha_{12}z_{v+1,1,2} \\ 0 \\ \vdots \\ 0 \end{pmatrix}.$$

5. Procédé selon la revendication 3, dans lequel un i-[ième] vecteur colonne $u_i$ de la matrice de l'espace -temps unitaire est exprimé par

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \cdot \\ \cdot \\ \cdot \\ \alpha_{i1} z_{v+1,i,1} (1 - E_{u_{(i-1)i}}) \\ \alpha_{i2} z_{v+1,i,2} \\ 0 \\ \cdot \\ \cdot \\ \cdot \\ 0 \end{pmatrix}$$

6. Procédé selon la revendication 3, dans lequel un $L^{\text{ième}}$ vecteur colonne $u_i$ de la matrice de l'espace-temps unitaire est exprimé par

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \cdot \\ \cdot \\ \cdot \\ \alpha_{L1} z_{v+1,L,1} (1 - E_{u_{(L-1)L}}) \end{pmatrix}$$

7. Procédé selon la revendication 3, dans lequel le poids de normalisation $\alpha_{i,j}$ multiplié par un premier bloc est exprimé par

$$|\alpha_{11}|^2 |z_{v+1,1,1}| = |\alpha_{12}|^2 |z_{v+1,1,2}| = 0.5.$$

8. Procédé selon la revendication 3, dans lequel le poids de normalisation $\alpha_{i,j}$ multiplié par un second bloc à un $(L-1)^{\text{ième}}$ est exprimé par

$$|\alpha_{i1}|^2 |z_{v+1,i,1}|^2 \{ E_{u_{(i-1)i}} \sum_{j=1}^{i-1} E_{u_{(i-1)j}} + (1 - E_{u_{(i-1)i}})^2 \} = |\alpha_{i2}|^2 |z_{v+1,i,2}|^2 = 0.5$$

dans lequel $E_{u_{(i-l)i}}$ denote l'énergie de $u_{(i-l)i}$.

9. Procédé selon la revendication 3, dans lequel le poids de normalisation $\alpha_{i,j}$ multiplié par un $L^{\text{ième}}$ bloc est exprimé par

$$|\alpha_{L1}|^2 |z_{v+1,L,1}|^2 \left\{ E_{u_{(L-1)L}} \sum_{j=1}^{L-1} E_{u_{(L-1)j}} + (1 - E_{u_{(L-1)L}})^2 \right\} = 1$$

dans lequel $E_{u_{(i-l)i}}$ denote l'énergie $u_{(i-l)i}$.

10. Emetteur pour transmettre des signaux dans un système de communication mobile utilisant un schéma MIMO, à sorties multiples et à entrées multiples, l'émetteur comprenant:

un générateur de matrice de transmission (120) configuré pour générer une première matrice sous forme d'une matrice à double diagonale afin de correspondre à un mot de code, et pour générer une matrice d'espace-temps unitaire à partir de la matrice à double diagonale en utilisant un schéma de Gram-Schmidt;

un multiplicateur (130) configuré pour multiplier la matrice espace-temps unitaire par une première matrice de transmission finale désignant des signaux transmis dans un second intervalle de temps précédent le premier intervalle de temps, générant ainsi une seconde matrice de transmission finale désignant des signaux à transmettre dans le premier temps intervalle; et

un processeur radiofréquence, RF, configuré pour émettre des signaux correspondant à la seconde matrice de transmission finale à travers une pluralité d'antennes d'émission dans le premier intervalle de temps.

**11.** Emetteur selon la revendication 10, dans lequel la première matrice est exprimée par

$$Z_{v+1} = \begin{pmatrix} \alpha_{1,1} z_{v+1,1,1} & 0 & \cdots & 0 & 0 \\ \alpha_{1,2} z_{v+1,1,2} & \alpha_{2,1} z_{v+1,2,1} & \cdots & 0 & 0 \\ 0 & \alpha_{2,2} z_{v+1,2,2} & \cdots & 0 & 0 \\ 0 & 0 & \cdots & 0 & 0 \\ \vdots & \vdots & \ddots & \vdots & \vdots \\ 0 & 0 & \cdots & \alpha_{L-1,1} z_{v+1,L-1,1} & 0 \\ 0 & 0 & \cdots & \alpha_{L-1,2} z_{v+1,L-1,2} & \alpha_{L,1} z_{v+1,L,1} \end{pmatrix}$$

lorsqu'un nombre de la pluralité d'antennes d'émission est égal à deux, dans lequel $Z_{v+1}$ désigne la première matrice, $Z_{v+1,i,j}$ représente le mot de code, i désigne un index représentant des blocs constituant le mot de code, v désigne un indice représentant un intervalle de temps, j désigne un indice représentant une antenne d'émission, L désigne un nombre de blocs constituant le mot de code et ay désigne un poids de normalisation multiplié par un i-ième bloc transmis par une j-ième antenne d'émission de la pluralité d'antennes d'émission.

**12.** Emetteur selon la revendication 11, **caractérisé en ce que** le générateur de matrice de transmission est configuré pour:

définir des vecteurs de colonne non nuls respectifs de la première matrice en tant que $(v_1, v_2, v_3, ... , v_L)$ et définir des vecteurs de colonne respectifs de la matrice espace-temps unitaire en tant que $(u_1, u_2, u_3, ... , u_L)$, et générer un premier vecteur de colonne $u_1$ de la matrice espace-temps unitaire à partir du premier vecteur de colonne $v_1$ de la première matrice, exprimé par $u_1 = k_1 v_1$,, et générer un second vecteur de colonne $u_2$ en un L-ième vecteur de colonne $u_L$ de la matrice espace-temps unitaire du second vecteur de colonne $v_2$ à un L-ième vecteur de colonne $v_i$ de la première matrice telle qu'exprimée par un $= k_i(v_i - <v_1,u_1> u_1 - V_i, U_2> U_2 - ... - < V_i.U_{i-1} > u_{i-1})$, où $k_i$ dépassant zéro $(k_i > 0)$ doit être sélectionné de manière à satisfaire $(|u_1| = 1)$.

**13.** Emetteur selon la revendication 12, dans lequel le premier vecteur colonne $u_i$ de la matrice unitaire espace-temps est exprimé par

$$u_1 = k_1 \begin{pmatrix} \alpha_{11} z_{v+1,1,1} \\ \alpha_{12} z_{v+1,1,2} \\ 0 \\ \vdots \\ 0 \end{pmatrix}.$$

**14.** Emetteur selon la revendication 12, dans lequel un i-ième vecteur colonne $u_i$ de la matrice espace-temps unitaire est exprimée par

$$u_i = k_i \begin{pmatrix} \alpha_{i1} z_{v+1,i,1} u^*_{(i-1)i} u_{(i-1)1} \\ \alpha_{i1} z_{v+1,i,1} u^*_{(i-1)i} u_{(i-1)2} \\ \cdot \\ \cdot \\ \cdot \\ \alpha_{i1} z_{v+1,i,1} (1 - E_{u_{(i-1)i}}) \\ \alpha_{i2} z_{v+1,i,2} \\ 0 \\ \cdot \\ \cdot \\ \cdot \\ 0 \end{pmatrix} .$$

**15.** Emetteur selon la revendication 12, **caractérisé en ce que** le $L^{-ième}$ vecteur colonne $u_L$ de la matrice unitaire espace-temps est exprimé par

$$u_L = k_L \begin{pmatrix} \alpha_{L1} z_{v+1,L,1} u^*_{(L-1)L} u_{(L-1)1} \\ \alpha_{L1} z_{v+1,L,1} u^*_{(L-1)L} u_{(L-1)2} \\ \cdot \\ \cdot \\ \cdot \\ \alpha_{L1} z_{v+1,L,1} (1 - E_{u_{(L-1)L}}) \end{pmatrix} .$$

**16.** Emetteur selon la revendication 12, **caractérisé en ce qu'**un poids de normalisation $\alpha_{i,j}$ multiplié par un premier bloc est exprimé par

$$|\alpha_{11}|^2 | z_{v+1,1,1}| = | \alpha_{12}|^2| z_{v+1,1,2}| = 0.5.$$

**17.** Emetteur selon la revendication 12, dans lequel le poids de normalisation $\alpha_{i,j}$ multiplié par un second bloc à un $(L-1)^{-ième}$ est exprimé par

$$|\alpha_{i1}|^2 |z_{v+1,i,1}|^2 \{ E_{u_{(i-1)i}} \sum_{j=1}^{i-1} E_{u_{(i-1)}} + (1 - E_{u_{(i-1)i}})^2 \} = |\alpha_{i2}|^2 |z_{v+1,i,2}|^2 = 0.5$$

dans lequel $E_{u(i-l)i}$ dénote l'énergie de $u_{(i-l)i}$.

**18.** Emetteur selon la revendication 12, dans lequel le poids de normalisation $\alpha_{i,j}$ multiplié par un L$^{ième}$ bloc est exprimé par

$$\left|\alpha_{L1}\right|^2 \left|z_{v+1,L,1}\right|^2 \left\{ E_{u_{(L-1)L}} \sum_{j=1}^{L-1} E_{u_{(L-1)j}} + (1 - E_{u_{(L-1)L}})^2 \right\} = 1$$

dans lequel $E_{u_{(i-l)i}}$ dénote l'énergie de $u_{(i-l)i}$.

FIG.1

EP 1 768 295 B1

FIG.2

25

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030076777 A
- WO 9914871 A

- US 2003072395 A

**Non-patent literature cited in the description**

- **C. YUEN et al.** Differential Transmit Diversity Based on Quasi-Orthogonal Space-Time Block Code. *Globecom,* vol. 04, 545-549

- **Z. DU et al.** A New Two Level Differential Unitary Space-Time Modulation. *Wireless Communications and Networking conference,* 2005, 479-482